# EUROPEAN PATENT APPLICATION

(11) **EP 4 675 799 A1**
(43) Date of publication of application: **07.01.2026**
(21) Application number: 24890183.7
(22) Date of filing: 26.07.2024
(51) Int. Cl.: H01M 50/244, H01M 50/249, H01M 50/258

(54) **BATTERY CASE BODY, BATTERY AND ELECTRICAL APPARATUS**

(30) Priority: 16.11.2023 CN 202311532985
(71) Applicant: Contemporary Amperex Technology Co., Ltd., Ningde, Fujian 352100 (CN)
(72) Inventor: WU, Kai, Ningde, Fujian 352100 (CN); FANG, Zhengyu, Ningde, Fujian 352100 (CN); QIN, Feng, Ningde, Fujian 352100 (CN); HOU, Yujia, Ningde, Fujian 352100 (CN)
(74) Representative: Lorenz Seidler Gossel Part. mbB
(86) International application number: PCT/CN2024/107874
(87) International publication number: WO 2025/102818

(57) **Abstract**

A battery box, a battery (100), and an electric device (200) are disclosed. The battery box has an accommodation space (13), and the battery box includes: a bottom plate (14) provided with a first through hole (15); and a mounting apparatus (30) including a mounting block (31) and a connection structure (32), where the mounting block (31) is disposed on a side of the bottom plate (14) facing the accommodation space (13), the mounting block (31) is aligned with the first through hole (15), the connection structure (32) passes through the first through hole (15) and has one end connected to the mounting block (31), and the other end of the connection structure (32) is configured to be connected to a fixed installation body. This solution addresses the issue in existing battery packs where the mounting portions, due to bearing complex load stress, are prone to unstable connections with the vehicle chassis.

## Description

### CROSS-REFERENCE TO RELATED APPLICATIONS

The present application claims priority to Chinese Patent Application No. 202311532985.8, filed on November 16, 2023 and entitled "BATTERY BOX, BATTERY, AND ELECTRIC DEVICE," the entire contents of which are incorporated herein by reference.

### TECHNICAL FIELD

The present application pertains to the technical field of battery installation, and particularly relates to a battery box, a battery, and an electric device.

### BACKGROUND

In related technologies, the outer wall of a battery box of a battery pack is provided with circumferentially distributed mounting portions, and each of the mounting portions is fixedly connected to a vehicle chassis of an electric vehicle. Each mounting portion is spaced from the center of gravity of the battery pack, and from a mechanical perspective, the load stress borne by each mounting portion is relatively complex. During the operation of the electric vehicle, the complex load stress borne by each mounting portion is likely to lead to unstable connections between the mounting portions and the vehicle chassis, and in severe cases, even cause connection failure between the mounting portions and the vehicle chassis, thereby affecting the driving safety of the electric vehicle.

### SUMMARY

Embodiments of the present application are intended to provide a battery box, a battery, and an electric device, including but not limited to addressing the issue in existing batteries where the mounting portions, due to bearing complex load stress, are prone to unstable connections with a vehicle chassis.

The technical solution adopted by the embodiments of the present application is as follows:
According to a first aspect of the present application, a battery box having an accommodation space is provided, including:
a bottom plate provided with a first through hole; and
a mounting apparatus including a mounting block and a connection structure, where the mounting block is disposed on a side of the bottom plate facing the accommodation space, the mounting block is aligned with the first through hole, the connection structure passes through the first through hole and has one end connected to the mounting block, and the other end of the connection structure is configured to be connected to a fixed installation body.

The battery box provided by the embodiments of the present application is used for assembling a battery, and the battery box employs a mounting apparatus located at a central position to be connected to the fixed installation body. Additionally, a plurality of mounting portions on a circumferential side wall of the battery box are also fixedly connected to the fixed installation body, thereby integrally and securely mounting the battery to the fixed installation body. In this way, compared with the battery box in the related technologies that is fixedly connected to the fixed installation body solely through mounting portions on the circumferential side wall of the battery box, the battery box provided by the embodiments of the present application can distribute the load stress of each mounting portion through the mounting apparatus located at the central position of the battery, improving the stress distribution on each mounting portion and enhancing the connection stability between the battery and the fixed installation body.

In some embodiments of the present application, the connection structure includes a mounting sleeve, the mounting block is provided with a second through hole, the second through hole is aligned with the first through hole, the mounting sleeve passes through the first through hole and is installed in the second through hole, and an end of the mounting sleeve away from the accommodation space is configured to be connected to the fixed installation body. This allows the mounting sleeve to be conveniently and quickly inserted and installed into the mounting block, improving the assembly efficiency between the mounting sleeve and the mounting block.

In some embodiments of the present application, the connection structure further includes a connection member, the connection member is connected to the mounting sleeve, and the connection member extends outside the bottom plate to be connected to the fixed installation body. Through the insertion fit between the connection member and the mounting sleeve, the assembly process between the connection member and the mounting sleeve is facilitated, improving assembly efficiency.

In some embodiments of the present application, the mounting block is provided with two opposing first abutment structures and two opposing second abutment structures, a first arrangement direction of the two first abutment structures is perpendicular to a second arrangement direction of the two second abutment structures, the two first abutment structures are configured to abut against battery cells adjacent to the mounting block and distributed along the first arrangement direction, and the two second abutment structures are configured to abut against battery cells adjacent to the mounting block and distributed along the second arrangement direction. This stabilizes the placement position of the mounting block within the accommodation space, preventing positional slippage of the mounting block within the accommodation space.

In some embodiments of the present application, the first abutment structure and/or the second abutment structure is a rod-shaped structure, and an end of the rod-shaped structure is configured to abut against the battery cell. Alternatively, in some other embodiments of the present application, the first abutment structure and/or the second abutment structure is a block-shaped structure, the block-shaped structure having an abutment side surface adapted to a side surface shape of the battery cell. This stabilizes the placement position of the mounting block within the accommodation space, preventing positional slippage of the mounting block within the accommodation space.

In some embodiments of the present application, an outer contour of the mounting block is the same as an outer contour of the battery cell. This stabilizes the placement position of the mounting block within the accommodation space, preventing positional slippage of the mounting block within the accommodation space.

In some embodiments of the present application, an outer wall of the mounting sleeve is in a limiting fit with a hole wall of the second through hole. Specifically, in some embodiments of the present application, the hole wall of the second through hole is provided with an insertion block, and the outer wall of the mounting sleeve is provided with a groove engaging with the insertion block. The insertion block restricts the mounting sleeve to prevent the mounting sleeve from disengaging from the second through hole.

In some embodiments of the present application, a plurality of insertion blocks are provided, and the plurality of insertion blocks are circumferentially arranged on the hole wall of the second through hole. Alternatively, the insertion block is annular, and the insertion block is embedded and fixed in the hole wall of the second through hole. The insertion block restricts the mounting sleeve to prevent the mounting sleeve from disengaging from the second through hole.

In some embodiments of the present application, the mounting sleeve includes a first sleeve and a second sleeve, a first end of the first sleeve passes through the first through hole, a second end of the first sleeve is inserted into the second through hole, the first sleeve is provided with a step surface, the second sleeve is connected to the second end of the first sleeve, and the groove is formed between an end of the second sleeve and the step surface. This stabilizes the mounting sleeve on the mounting block, preventing the mounting sleeve from disengaging from the second through hole.

In some embodiments of the present application, the second end of the first sleeve is threadedly connected to the second sleeve. The threaded connection between the first sleeve and the second sleeve significantly improves connection efficiency.

In some embodiments of the present application, a sealing ring and a structural adhesive are provided between the first sleeve and the bottom plate to form a sealing arrangement for the first through hole. The sealing ring and the structural adhesive form a sealing arrangement for the first through hole, effectively preventing external moisture from penetrating into the accommodation space of the battery box through the first through hole, which could otherwise corrode the battery cells and electrical components, thereby protecting the internal components of the battery pack well.

In some embodiments of the present application, a side of the bottom plate facing away from the accommodation space is provided with a reinforcing rib, the reinforcing rib is provided with a mating hole, and the mating hole is aligned with and in communication with the first through hole. This enhances the structural strength of the battery box to meet the assembly requirements for installation strength and stability of the battery box.

In some embodiments of the present application, the battery box includes a plurality of mounting apparatuses uniformly distributed on the bottom plate. This effectively improves the stress distribution of each mounting portion of the battery pack, enhancing the connection stability between the battery pack and the fixed installation body.

In some embodiments of the present application, the battery box includes a lower box body and a box cover, where the lower box body and the box cover fit each other to form the accommodation space, a circumferential side of the lower box body is provided with a plurality of mounting portions, and the mounting portions are configured to be connected to the fixed installation body. The battery pack can distribute the load stress of each mounting portion through the mounting apparatus located at the central position, improving the stress distribution of each mounting portion of the battery pack and enhancing the connection stability between the battery pack and the fixed installation body.

According to a second aspect of the present application, a battery is provided. Specifically, the battery includes:
the battery box as described above; and
a battery cell disposed in the accommodation space.

In some embodiments of the present application, the mounting block abuts against side walls of battery cells surrounding the mounting block.

The battery provided by the embodiments of the present application is assembled using the above battery box, and the mounting apparatus at the central position of the battery is connected to the fixed installation body. Additionally, a plurality of mounting portions on the circumferential side wall of the battery box are also fixedly connected to the fixed installation body, thereby integrally and securely mounting the battery to the fixed installation body. Compared with the battery box in the related technologies that is fixedly connected to the fixed installation body solely through mounting portions on the circumferential side wall of the battery box, the battery box provided by the embodiments of the present application can distribute the load stress of each mounting portion through the mounting apparatus located at the central position of the battery, improving the stress distribution on each mounting portion and enhancing the connection stability between the battery and the fixed installation body.

According to a third aspect of the present application, an electric device is provided. Specifically, the electric device includes a fixed installation body and the battery as described above, where the battery is installed on the fixed installation body.

### BRIEF DESCRIPTION OF DRAWINGS

To more clearly illustrate the technical solutions in the embodiments of the present application, the drawings required for use in the embodiments or exemplary technical descriptions are briefly introduced below. It is apparent that the drawings described below are merely some embodiments of the present application, and those skilled in the art may obtain other drawings based on these drawings without creative effort.
FIG. 1 is a schematic diagram of an exploded structure of a battery according to an embodiment of the present application;
FIG. 2 is a schematic diagram of a three-dimensional structure of a mounting sleeve of a battery box of a battery according to an embodiment of the present application;
FIG. 3 is a schematic diagram of a top view structure of a battery according to an embodiment of the present application, where a box cover is removed;
FIG. 4 is a schematic diagram of a bottom view structure of a battery according to an embodiment of the present application, where a box cover is removed;
FIG. 5 is a schematic diagram of a cross-sectional structure along an A-A direction in FIG. 3;
FIG. 6 is a schematic diagram of an enlarged structure at B in FIG. 5;
FIG. 7 is a schematic diagram of a partial cross-sectional structure of a battery connected to a fixed installation body through a mounting apparatus according to an embodiment of the present application, where a box cover is removed; and
FIG. 8 is a schematic diagram of a structure of an electric device according to an embodiment of the present application.

### Description of reference signs in the drawings:

100. battery;
10. housing; 11. lower box body; 12. box cover; 13. accommodation space; 14. bottom plate; 15. first through hole; 16. mounting portion;
20. battery cell;
30. mounting apparatus; 31. mounting block; 311. second through hole; 32. connection structure; 321. mounting sleeve; 3211. first sleeve; 32110. step surface; 32111. annular protrusion; 3212. second sleeve; 322. connection member; 33. insertion block; 34. sealing ring; 35. structural adhesive; 351. first structural adhesive; 352. second structural adhesive;
40. reinforcing rib;
200. electric device; 210. fixed installation body; 220. drive motor;
X. first arrangement direction; and Y. second arrangement direction.

### DESCRIPTION OF EMBODIMENTS

To make the objectives, technical solutions, and advantages of the present application clearer, the present application is further described in detail below with reference to the drawings and embodiments. It should be understood that the specific embodiments described herein are only used to explain the present invention and are not intended to limit the present application.

It should be noted that when a component is referred to as being "fixed to" or "disposed on" another component, it may be directly on the another component or indirectly on the another component. When a component is referred to as being "connected to" another component, it may be directly or indirectly connected to the another component. The terms "upper," "lower," "left," "right," and the like indicate orientations or positional relationships based on the orientations or positional relationships shown in the drawings, and are only for convenience of description, not indicating or implying that the referred apparatus or element must have a specific orientation, be constructed, or operated in a specific orientation, and thus should not be construed as limiting the present application. For those skilled in the art, the specific meanings of the above terms can be understood according to specific circumstances. The terms "first" and "second" are used only for descriptive convenience and cannot be understood as indicating or implying relative importance or implicitly indicating the number of technical features. The term "a plurality of" means two or more, unless otherwise specifically defined.

Currently, with the development of market trends, the application of traction batteries, especially lithium batteries (hereinafter collectively referred to as batteries), is becoming increasingly widespread. Batteries are not only used in energy storage systems such as hydropower, thermal power, wind power, and solar power plants but are also widely applied in electric transportation vehicles such as electric bicycles, electric motorcycles, and electric cars, as well as in police equipment, military equipment, aerospace, and other fields. With the continuous expansion of battery application fields, the market demand for batteries is also continuously increasing.

In the related technologies, during the assembly and production of a battery, battery cells are first placed into the accommodation space of a battery box, and electrical components are used to connect the battery cells in series, parallel, or a combination thereof according to the designed rated voltage of the battery. Then, the box cover and the lower box body cover each other to complete the assembly of the battery (electrical components include but are not limited to circuit boards, terminals, and temperature sensors).

Moreover, the assembled battery is widely used in electric device to provide electrical energy, and the electric device include but are not limited to mobile phones, tablets, laptops, electric toys, electric tools, electric bicycles, electric vehicles, ships, and spacecraft. Electric toys may include but are not limited to fixed or mobile electric toys, such as game consoles, electric car toys, electric ship toys, and electric airplane toys. Spacecraft may include but are not limited to airplanes, rockets, space shuttles, and spaceships.

In particular, with the rapid development of new energy electric vehicles, assembled batteries are used in electric vehicles to provide electrical energy for the drive motor and other electrical devices of the electric vehicles. In the related technologies, the outer wall of the battery box of the battery is provided with circumferentially distributed mounting portions, and the mounting portions are fixedly connected to the crossbeams and/or longitudinal beams of the vehicle chassis of the electric vehicles, thereby securely mounting the battery to the vehicle chassis of the electric vehicles. As a result, the load stress of the battery is borne by the mounting portions of the battery box, the mounting portions are located on the circumferential side wall of the battery box, and the mounting portions are spaced from the center of gravity of the battery. From a mechanical perspective, the load stress borne by each mounting portion is relatively complex. During the operation of the electric vehicle, the stress is likely to lead to unstable connections between the mounting portions and the vehicle chassis, and in severe cases, even cause connection failure between the mounting portions and the vehicle chassis, affecting the driving safety of the electric vehicle.

Based on the above considerations, to address the issue of unstable connections between the battery on the electric vehicle and the vehicle chassis in the related technologies, the embodiments of the present application provide a new battery box designed with a mounting apparatus at a central position. This battery box is used to assemble a battery, and the battery is applied to an electric vehicle to supply power to the drive motor and electrical devices. When the battery is installed onto the vehicle chassis of the electric vehicle, the battery is connected to the vehicle chassis through the mounting portions on the circumferential side wall of the battery box, and the battery is also connected to the vehicle chassis through the mounting apparatus at the central position of the battery box, thereby improving the load stress distribution at each mounting position between the battery and the vehicle chassis, enhancing the stress distribution of each mounting position of the battery, and improving the connection stability between the battery and the vehicle chassis.

Here:
The central position of the battery generally refers to a regional position enclosed by the circumferential side wall of the battery. After the battery is installed, any position in the region coinciding with the vertical projection of the bottom plate of the lower box body may be referred to as the central position of the battery.

A battery cell is a basic unit for converting chemical energy into electrical energy. The battery cell includes a shell, a cell, an electrolyte, a positive electrode current collector, a negative electrode current collector, and other parts. The cell is provided with a positive tab and a negative tab, and the cell is installed in the shell. The shell is filled with the electrolyte, and the electrolyte impregnates the cell. The positive tab forms a positive terminal of the battery cell through the positive electrode current collector, and the negative tab forms a negative terminal of the battery cell through the negative electrode current collector.

To illustrate the technical solutions provided by the present application, detailed descriptions are provided below in conjunction with specific drawings and embodiments.

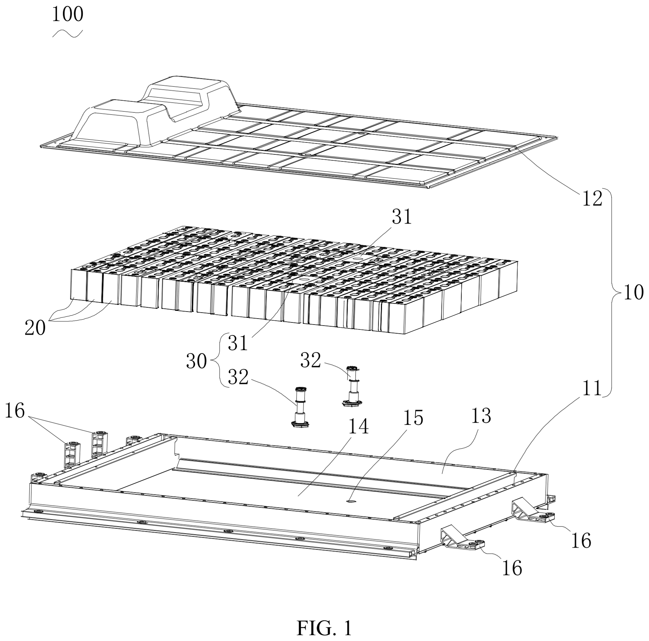

As shown in FIGs. 1 to 5, the battery 100 provided by the embodiments of the present application includes a battery box, where the battery box includes a housing 10, a mounting apparatus 30, and a plurality of battery cells 20. The housing 10 forms an accommodation space 13, the housing 10 has a bottom plate 14, and the bottom plate 14 is configured to support the plurality of battery cells 20, meaning that the plurality of battery cells 20 are disposed on the bottom plate 14 and located within the accommodation space 13. Electrical components are used to connect the battery cells 20 in series, parallel, or a combination thereof according to the designed rated voltage of the battery. The bottom plate 14 is provided with a first through hole 15. The mounting apparatus 30 includes a mounting block 31 and a connection structure 32, where the mounting block 31 is disposed on the bottom plate 14 and located within the accommodation space 13, the mounting block 31 is aligned with the first through hole 15, and the mounting block 31 abuts against side walls of battery cells 20 surrounding the mounting block 31, thereby stably placing the mounting block 31 among the plurality of battery cells 20, and avoiding the slippage of the mounting block 31. The connection structure 32 passes through the first through hole 15 and is connected to the mounting block 31, and the connection structure 32 is configured to be connected to a fixed installation body 210. Additionally, the circumferential side of the housing 10 is provided with a plurality of mounting portions 16, and the mounting portions 16 are configured to be connected to the fixed installation body 210, thereby securely mounting the battery 100 to the fixed installation body 210.

The battery box provided by the embodiments of the present application employs a mounting apparatus 30 located at a central position of the battery 100 to be connected to the fixed installation body 210. Additionally, the plurality of mounting portions 16 on the circumferential side wall of the housing 10 are also fixedly connected to the fixed installation body 210, thereby securely mounting the battery 100 to the fixed installation body 210. Compared with the battery in the related technologies that is fixedly connected to the fixed installation body solely through mounting portions on the circumferential side wall of the battery box, the battery box provided by the embodiments of the present application can distribute the load stress of each mounting portion 16 through the mounting apparatus 30 located at the central position of the battery 100, improving the stress distribution on each mounting portion 16 of the battery 100 and enhancing the connection stability between the battery 100 and the fixed installation body 210.

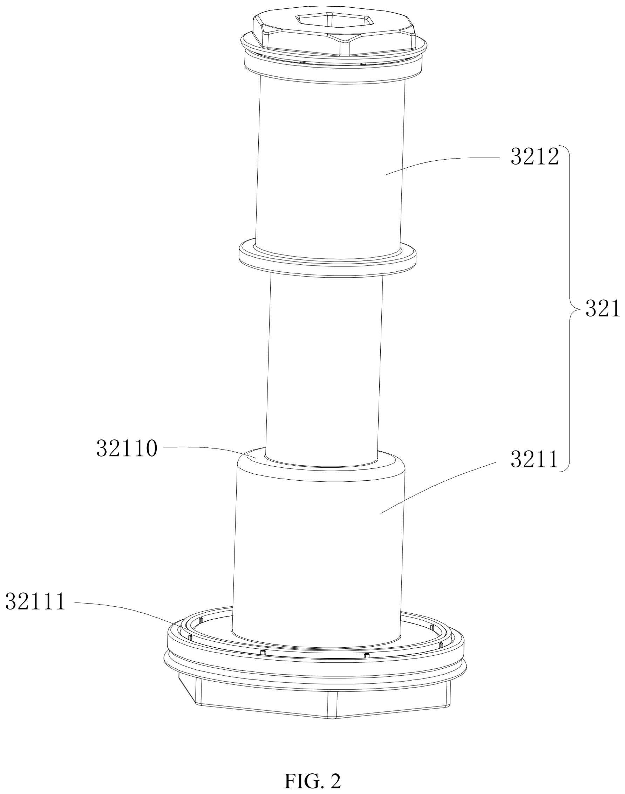

In some embodiments of the present application, as shown in FIGs. 2, 5, and 6, the connection structure 32 includes a mounting sleeve 321. To facilitate the assembly of the mounting sleeve 321 to the mounting block 31, the mounting block 31 is provided with a second through hole 311, and the second through hole 311 is aligned with the first through hole 15. When the mounting sleeve 321 is assembled to the mounting block 31, the mounting sleeve 321 passes through the first through hole 15 and is installed in the second through hole 311, and an end of the mounting sleeve 321 protruding from the first through hole 15 is configured to be connected to the fixed installation body 210 (for example, the end of the mounting sleeve 321 away from the accommodation space 13 is configured to be connected to the fixed installation body 210). By providing the second through hole 311 on the mounting block 31 and aligning the first through hole 15 with the second through hole 311, the mounting sleeve 321 can be conveniently and quickly inserted and installed into the mounting block 31, improving the assembly efficiency between the mounting sleeve 321 and the mounting block 31.

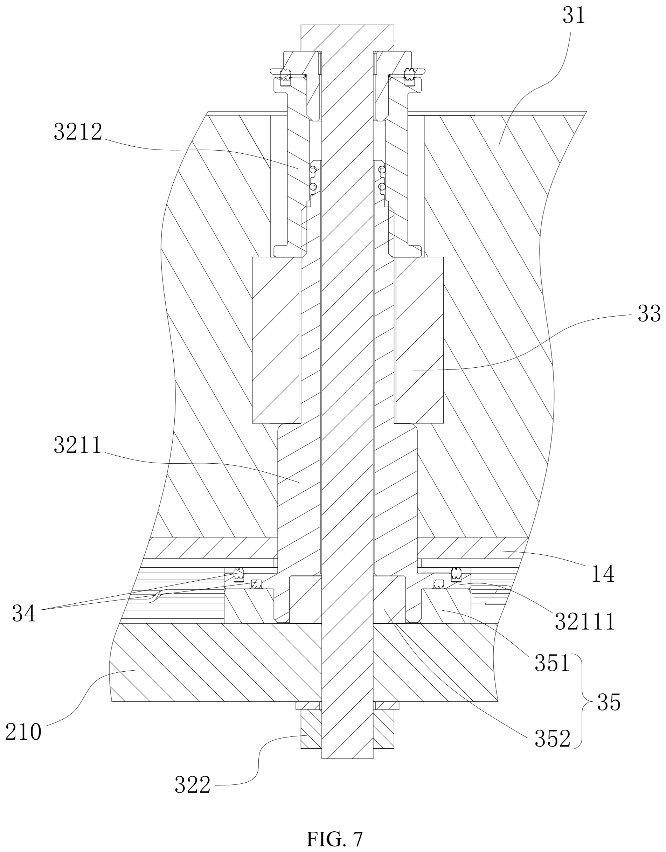

In some embodiments of the present application, in addition to including the mounting sleeve 321, as shown in FIG. 7, the connection structure 32 further includes a connection member 322, where the connection member 322 passes through the mounting sleeve 321, and the connection member 322 extends outside the housing 10 to be connected to the fixed installation body 210. In some embodiments of the present application, the connection member 322 includes but is not limited to a bolt and nut assembly, where the bolt passes through the mounting sleeve 321, the head of the bolt abuts against an end of the mounting sleeve 321 away from the fixed installation body 210, the threaded end protruding from the mounting sleeve 321 is assembled to the fixed installation body 210, and a nut is used to lock it on the outer side of the fixed installation body 210, thereby securely mounting the battery 100 to the fixed installation body 210. Thus, the insertion fit between the connection member 322 and the mounting sleeve 321 facilitates the assembly process between the connection member 322 and the mounting sleeve 321, improving assembly efficiency.

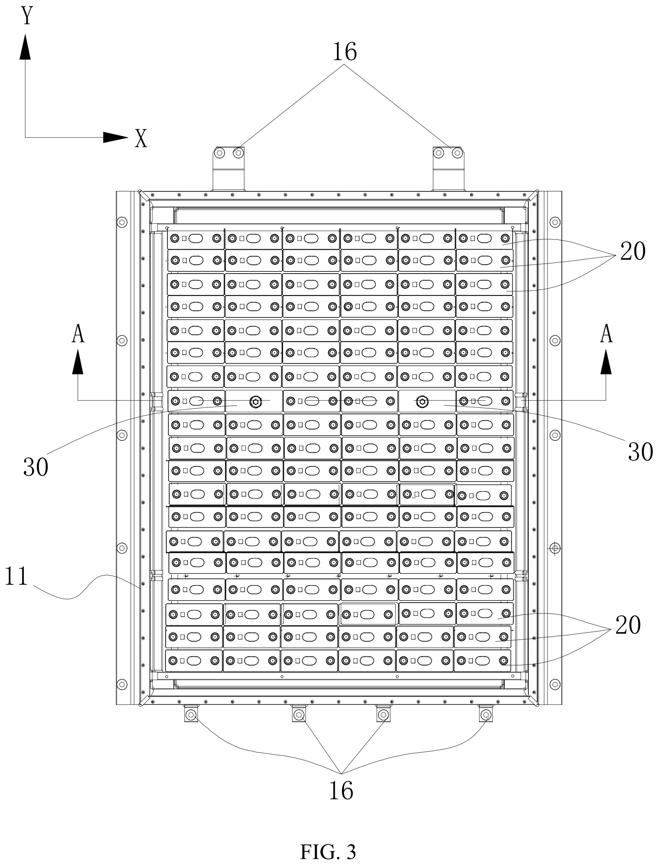

In some embodiments of the present application, the plurality of battery cells 20 are arranged in a matrix array, and the mounting block 31 is located in any one column. In some embodiments of the present application, as shown in FIG. 3, the battery 100, for example, includes six columns of battery cells 20. To achieve optimal distribution of load stress at each mounting position, mounting blocks 31 are placed at the intermediate positions of the second and fifth columns of battery cells 20, separately, thereby using two mounting apparatuses 30 to distribute the load stress of each mounting portion 16 on the circumferential side wall of the housing 10, improving the stress distribution on each mounting portion 16 of the battery 100 and enhancing the connection stability between the battery 100 and the fixed installation body 210.

As shown in FIG. 3, in some embodiments of the present application, since the mounting block 31 is used as the support base for the mounting apparatus 30 inside the battery 100, there is no need to design crossbeams or longitudinal beams inside the housing 10 of the battery box of the battery 100 as the support base for the mounting apparatus 30 in the battery 100. In other words, the interior of the housing 10 of the battery box is provided with no crossbeam or longitudinal beam, thereby saving assembly space. The saved assembly space can be used to accommodate a greater number of battery cells 20, significantly improving the space utilization rate of the internal space of the housing 10. Additionally, the increased number of battery cells 20 enhance the overall energy storage capacity of the battery 100, improving its energy density.

In some embodiments of the present application, the mounting block 31 is provided with two opposing first abutment structures and two opposing second abutment structures. A first arrangement direction X of the two first abutment structures is perpendicular to a second arrangement direction Y of the two second abutment structures. The two first abutment structures abut against battery cells 20 adjacent to the mounting block 31 and distributed along the first arrangement direction X, and the two second abutment structures abut against battery cells 20 adjacent to the mounting block 31 and distributed along the second arrangement direction Y. The first arrangement direction X and the second arrangement direction Y are as shown by the X and Y arrows in FIG. 3. The first abutment structures and the second abutment structures abut against the battery cells 20 in the circumferential direction of the mounting block 31, thereby stabilizing the placement position of the mounting block 31 within the accommodation space 13, and preventing positional slippage of the mounting block 31 within the accommodation space 13.

In some embodiments of the present application, the first abutment structure and/or the second abutment structure is a rod-shaped structure, and an end of the rod-shaped structure is configured to abut against the battery cell 20. Configuring the first abutment structure and/or the second abutment structure as a rod-shaped structure significantly reduces the weight of the mounting block 31, thereby helping to reduce the overall weight of the battery 100.

Alternatively, in some other embodiments of the present application, the first abutment structure and/or the second abutment structure is a block-shaped structure, and the block-shaped structure has an abutment side surface adapted to a side surface shape of the battery cell 20. Additionally, the outer contour of the mounting block 31 is the same as the outer contour of the battery cell 20, replacing one battery cell 20 in the column where the mounting block 31 is located. By designing the mounting block 31 to have the same outer contour as the battery cell 20, when the mounting block 31 is placed in the accommodation space 13 to cooperate with the battery cells 20, the mounting block 31 occupies the placement position of one battery cell 20, and each side surface of the mounting block 31 correspondingly abuts against one battery cell 20, so that the mounting block 31 is stably placed in the accommodation space 13. Moreover, the mounting block 31 is in surface-to-surface contact with each surrounding battery cell 20. Thus, during the service life of the battery 100, in a case that a battery cell 20 bulges, the surface-to-surface contact reduces the pressure exerted on the battery cell 20, thereby avoiding sharp-edge compression that could puncture the battery cell 20, protecting the integrity of the battery cell 20.

In some embodiments of the present application, as shown in FIGs. 1 and 3, the outer contours of both the battery cell 20 and the mounting block 31 are designed to be rectangular prisms.

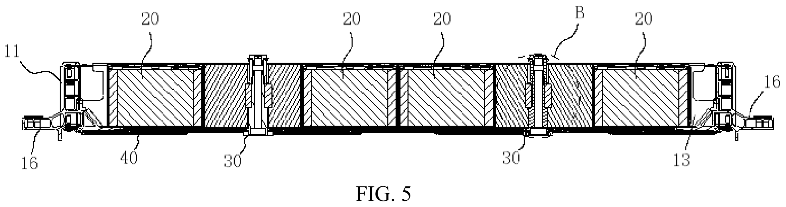

To improve the stability of the mounting sleeve 321 within the second through hole 311 of the mounting block 31, the outer wall of the mounting sleeve 321 forms a limiting fit with the hole wall of the second through hole 311. Specifically, as shown in FIGs. 5 to 7, in some embodiments of the present application, the hole wall of the second through hole 311 is provided with an insertion block 33, and the mounting sleeve 321 is restricted by the insertion block 33 to prevent the mounting sleeve 321 from disengaging from the second through hole 311. When the mounting sleeve 321 is inserted and assembled into the second through hole 311, the mounting sleeve 321 and the insertion block 33 cooperate to form a restrictive relationship, enabling the insertion block 33 to stably restrict the mounting sleeve 321 within the second through hole 311, and preventing the mounting sleeve 321 from disengaging from the second through hole 311.

In some embodiments of the present application, a plurality of insertion blocks 33 are provided, and the plurality of insertion blocks 33 are circumferentially arranged on the hole wall of the second through hole 311. When there are a plurality of insertion blocks 33, an annular mounting groove can be provided in the hole wall of the second through hole 311, and each insertion block 33 is sequentially embedded and fixed in the annular mounting groove.

Alternatively, in some other embodiments of the present application, the insertion block 33 is annular, and the insertion block 33 is embedded and fixed in the hole wall of the second through hole 311. When the insertion block 33 is annular, the mounting block 31 is formed by pre-embedding, meaning that the annular insertion block 33 is placed in the mold, and the mold cavity is poured to form the mounting block 31. Thus, the annular insertion block 33 is pre-embedded and fixed in the formed mounting block 31.

As shown in FIGs. 2, 6, and 7, in some embodiments of the present application, the mounting sleeve 321 includes a first sleeve 3211 and a second sleeve 3212, where the first sleeve 3211 and the second sleeve 3212 are docked to form a complete mounting sleeve 321. Specifically, a first end of the first sleeve 3211 passes through the first through hole 15, a second end of the first sleeve 3211 is inserted into the second through hole 311, the first sleeve 3211 is provided with a step surface 32110, the step surface 32110 abuts against a first end of the insertion block 33, the second sleeve 3212 is connected to the second end of the first sleeve 3211, and an end of the second sleeve 3212 abuts against a second end of the insertion block 33. When the first sleeve 3211 and the second sleeve 3212 are assembled into the second through hole 311, the step surface 32110 of the first sleeve 3211 and the end of the second sleeve 3212 respectively abut against the two ends of the insertion block 33, thereby clamping the insertion block 33. Since the insertion block 33 is fixed to the mounting block 31, the insertion block 33 can restrict the mounting sleeve 321, preventing the mounting sleeve 321 from moving axially along the axis of the second through hole 311, that is, preventing the mounting sleeve 321 from disengaging from the second through hole 311 along the axis of the second through hole 311. This stabilizes the mounting sleeve 321 on the mounting block 31.

In some embodiments of the present application, the second end of the first sleeve 3211 is threadedly connected to the second sleeve 3212. The threaded connection between the first sleeve 3211 and the second sleeve 3212 significantly improves connection efficiency.

In some other embodiments of the present application, the second end of the first sleeve 3211 and the second sleeve 3212 may also be connected by a snap-fit assembly. Specifically, the outer wall of the second end of the first sleeve 3211 is provided with a snap-fit protrusion, and the interior of the second sleeve 3212 is provided with an L-shaped snap-fit groove adapted to the snap-fit protrusion. During assembly, the second end of the first sleeve 3211 is inserted into the second sleeve 3212, and the snap-fit protrusion slides into the snap-fit groove. Then, the first sleeve 3211 and the second sleeve 3212 are rotated relative to each other by an angle to complete the snap-fit cooperation between the snap-fit protrusion and the snap-fit groove, thereby completing the connection between the first sleeve 3211 and the second sleeve 3212. In this case, the first sleeve 3211 and the second sleeve 3212 together clamp the insertion block 33, meaning that the insertion block 33 restricts the mounting sleeve 321 from moving axially along the axis of the second through hole 311, preventing the mounting sleeve 321 from disengaging from the second through hole 311.

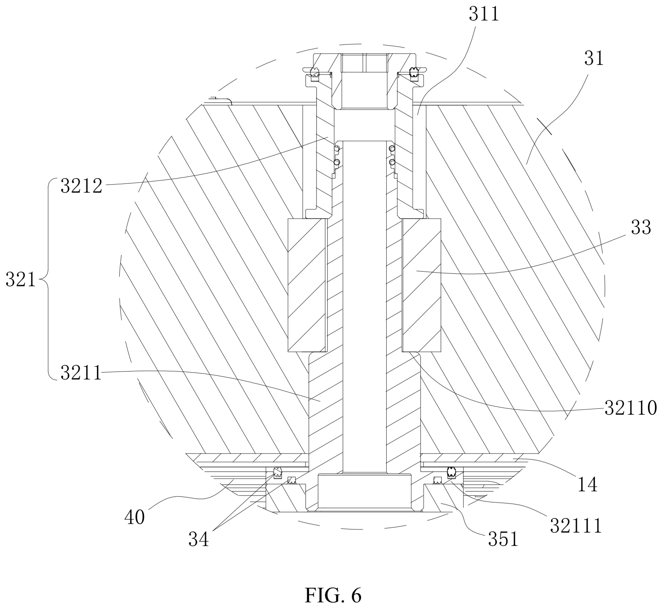

As shown in FIGs. 6 and 7, in some embodiments of the present application, a sealing ring 34 and a structural adhesive 35 are provided between the first sleeve 3211 and the bottom plate 14 to form a sealing arrangement for the first through hole 15. In the battery box, the outer wall of the end of the first sleeve 3211 protruding from the first through hole 15 is provided with an annular protrusion 32111, and the sealing ring 34 is disposed between the annular protrusion 32111 and the bottom plate 14. When the first sleeve 3211 and the second sleeve 3212 are tightened together by threading, the annular protrusion 32111 and the bottom plate 14 compress the sealing ring 34, causing elastic deformation of the sealing ring 34, thereby sealing the assembly gap between the first sleeve 3211 and the first through hole 15. Additionally, when the mounting apparatus 30 is connected to the fixed installation body 210, the structural adhesive 35 is disposed between the fixed installation body 210 and the end of the first sleeve 3211. When the connection structure 32 is fastened, the structural adhesive 35 is compressed between the fixed installation body 210 and the end of the first sleeve 3211, causing elastic deformation of the structural adhesive 35, such that the structural adhesive 35 seals the assembly gap among the connection structure 32, the through hole of the first sleeve 3211, and the fixed installation body 210. Thus, when the battery 100 is fixedly installed on the fixed installation body 210, the sealing ring 34 and the structural adhesive 35 form a sealing arrangement for the first through hole 15, effectively preventing external moisture from penetrating into the accommodation space 13 of the housing 10 through the first through hole 15, which could otherwise corrode the battery cells 20 and electrical components, thereby protecting the internal components of the battery 100 well.

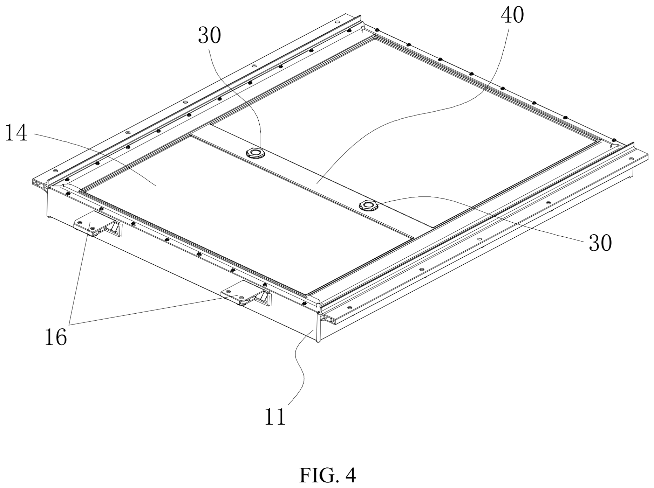

To enhance the structural strength of the housing 10 to meet the assembly requirements for installation strength and stability of the housing 10, as shown in FIG. 4, in the battery 100 of some embodiments of the present application, a side of the bottom plate 14 facing away from the accommodation space 13 is provided with a reinforcing rib 40, meaning that the reinforcing rib 40 is located outside the housing 10. Additionally, the reinforcing rib 40 is provided with a mating hole, the mating hole is aligned with the first through hole 15, and the mating hole is in communication with the first through hole 15. When the mounting sleeve 321 is assembled, the first sleeve 3211 sequentially passes through the first through hole 15 and the mating hole in the reinforcing rib 40 before being assembled to the fixed installation body 210. Thus, the reinforcing rib 40 can assist in enhancing the structural strength of the bottom plate 14 of the housing 10, thereby improving the installation strength of the housing 10. Therefore, after the battery 100 is installed on the fixed installation body 210, the installation stability of the battery 100 can be effectively improved.

Compared with the battery box of the battery in the related technologies that employs crossbeams or longitudinal beams internally to enhance structural strength of the battery box, the battery box of the battery 100 enhances the structural strength of the bottom plate 14 of the housing 10 by providing the reinforcing rib 40, thereby eliminating the need for crossbeams or longitudinal beams inside the housing 10. This significantly increases the accommodation space 13 of the housing 10 for placing battery cells 20, meaning that the accommodation space 13 can accommodate a greater number of battery cells 20, thereby increasing the total energy storage capacity of the battery 100 and increasing the energy density of the battery 100.

As shown in FIGs. 6 and 7, the structural adhesive 35 includes a first structural adhesive 351 and a second structural adhesive 352, where the first structural adhesive 351 sleeves the outer side of the end of the first sleeve 3211, and the second structural adhesive 352 is located on the inner side of the end of the first sleeve 3211 and sleeved on the bolt. When the battery 100 is installed to the fixed installation body 210, the reinforcing rib 40 and the fixed installation body 210 compress the first structural adhesive 351, and the first sleeve 3211 and the fixed installation body 210 compress the second structural adhesive 352. When the nut and bolt are locked, the first structural adhesive 351 is compressed by the reinforcing rib 40 and the fixed installation body 210, causing elastic deformation to seal the assembly gap among the fixed installation body 210, the reinforcing rib 40, and the first sleeve 3211. Additionally, the second structural adhesive 352 is compressed by the first sleeve 3211 and the fixed installation body 210, causing elastic deformation to seal the assembly gap among the fixed installation body 210, the first sleeve 3211, and the bolt. Thus, a two-level sealing arrangement is formed between the battery 100 and the fixed installation body 210 using the first structural adhesive 351 and the second structural adhesive 352, effectively preventing external moisture from penetrating into the accommodation space 13 through the assembly gap, which could otherwise corrode the battery cells 20 and electrical components, thereby protecting the internal components of the battery 100 well.

In the battery 100 of some embodiments of the present application, the battery 100 includes a plurality of mounting apparatuses 30, with any two adjacent mounting apparatuses 30 being spaced apart. In some embodiments of the present application, as shown in FIG. 3, the battery 100, for example, includes six columns of battery cells 20. To achieve optimal distribution of load stress at each mounting position, mounting blocks 31 are placed at the intermediate positions of the second and fifth columns of battery cells 20, separately, thereby using two mounting apparatuses 30 to distribute the load stress of each mounting portion 16 on the circumferential side wall of the housing 10, improving the stress distribution on each mounting portion 16 of the battery 100, and enhancing the connection stability between the battery 100 and the fixed installation body 210. In some other embodiments of the present application, the plurality of mounting apparatuses 30 may also be randomly distributed discretely, which can also distribute the load stress of each mounting portion 16 on the circumferential side wall of the housing 10, improving the stress distribution on each mounting portion 16 of the battery 100, and enhancing the connection stability between the battery 100 and the fixed installation body 210.

As shown in FIGs. 1 to 5, in the battery 100 of some embodiments of the present application, the housing 10 includes a lower box body 11 and a box cover 12, where the lower box body 11 and the box cover 12 fit each other to form the accommodation space 13, a circumferential side of the lower box body 11 is provided with a plurality of mounting portions 16, and the mounting portions 16 are configured to be connected to the fixed installation body 210. The battery 100 employs the mounting apparatus 30 located at the central position to be connected to the fixed installation body 210, and the plurality of mounting portions 16 on the circumferential side wall of the housing 10 are also fixedly connected to the fixed installation body 210, thereby securely mounting the battery 100 to the fixed installation body 210.

According to another aspect of the present application, a battery 100 is provided. The battery includes a plurality of battery cells 20 and the aforementioned battery box, and the plurality of battery cells 20 are arranged in a matrix array within the accommodation space 13 of the housing 10 of the battery box. When the battery 100 is installed on the fixed installation body 210, the battery box employs a mounting apparatus 30 located at the central position of the battery 100 to be connected to the fixed installation body 210. Additionally, the plurality of mounting portions 16 on the circumferential side wall of the housing 10 are also fixedly connected to the fixed installation body 210, thereby securely mounting the battery 100 to the fixed installation body 210. Compared with the battery in the related technologies that is fixedly connected to the fixed installation body solely through mounting portions on the circumferential side wall of the battery box, the battery box provided by the embodiments of the present application can distribute the load stress of each mounting portion 16 through the mounting apparatus 30 located at the central position of the battery 100, improving the stress distribution on each mounting portion 16 of the battery 100 and enhancing the connection stability between the battery 100 and the fixed installation body 210.

According to yet another aspect of the present application, an electric device 200 is provided. The electric device 200 includes a fixed installation body 210 and the battery 100 as described above, and the battery 100 is installed on the fixed installation body 210.

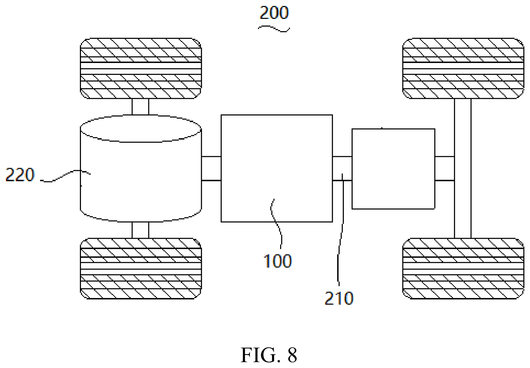

In the embodiments of the present application, the electric device 200 is a new energy electric vehicle, as shown in FIG. 8. Correspondingly, the fixed installation body 210 is the crossbeam and/or longitudinal beam of the vehicle chassis, and the battery 100 supplies power to the drive motor 220 and other electrical devices of the new energy electric vehicle.

The above are merely optional embodiments of the present application and are not intended to limit the present application. For those skilled in the art, various modifications and variations can be made to the present application. Any modifications, equivalent substitutions, improvements, and the like made within the spirit and principles of the present application shall be included within the scope of the claims of the present application.

## Claims

1. A battery box having an accommodation space, **characterized by** comprising:
a bottom plate provided with a first through hole; and
a mounting apparatus comprising a mounting block and a connection structure, wherein the mounting block is disposed on a side of the bottom plate facing the accommodation space, the mounting block is aligned with the first through hole, the connection structure passes through the first through hole and has one end connected to the mounting block, and the other end of the connection structure is configured to be connected to a fixed installation body.

2. The battery box according to claim 1, **characterized in that**
the connection structure comprises a mounting sleeve, the mounting block is provided with a second through hole, the second through hole is aligned with the first through hole, the mounting sleeve passes through the first through hole and is installed in the second through hole, and an end of the mounting sleeve away from the accommodation space is configured to be connected to the fixed installation body.

3. The battery box according to claim 2, **characterized in that**
the connection structure further comprises a connection member, the connection member is connected to the mounting sleeve, and the connection member extends outside the bottom plate to be connected to the fixed installation body.

4. The battery box according to any one of claims 1 to 3, **characterized in that**
the mounting block is provided with two opposing first abutment structures and two opposing second abutment structures, a first arrangement direction of the two first abutment structures is perpendicular to a second arrangement direction of the two second abutment structures, the two first abutment structures are configured to abut against battery cells adjacent to the mounting block and distributed along the first arrangement direction, and the two second abutment structures are configured to abut against battery cells adjacent to the mounting block and distributed along the second arrangement direction.

5. The battery box according to claim 4, **characterized in that**
the first abutment structure and/or the second abutment structure is a rod-shaped structure, and an end of the rod-shaped structure is configured to abut against the battery cell.

6. The battery box according to claim 4, **characterized in that**
the first abutment structure and/or the second abutment structure is a block-shaped structure, the block-shaped structure having an abutment side surface adapted to a side surface shape of the battery cell.

7. The battery box according to claim 6, **characterized in that**
an outer contour of the mounting block is the same as an outer contour of the battery cell.

8. The battery box according to any one of claims 2 to 7, **characterized in that**
an outer wall of the mounting sleeve is in a limiting fit with a hole wall of the second through hole.

9. The battery box according to claim 8, **characterized in that**
the hole wall of the second through hole is provided with an insertion block, and the outer wall of the mounting sleeve is provided with a groove engaging with the insertion block.

10. The battery box according to claim 9, **characterized in that**
a plurality of insertion blocks are provided, and the plurality of insertion blocks are circumferentially arranged on the hole wall of the second through hole;
or, the insertion block is annular, and the insertion block is embedded and fixed in the hole wall of the second through hole.

11. The battery box according to claim 9 or 10, **characterized in that**
the mounting sleeve comprises a first sleeve and a second sleeve, a first end of the first sleeve passes through the first through hole, a second end of the first sleeve is inserted into the second through hole, the first sleeve is provided with a step surface, the second sleeve is connected to the second end of the first sleeve, and the groove is formed between an end of the second sleeve and the step surface.

12. The battery box according to claim 11, **characterized in that**
the second end of the first sleeve is threadedly connected to the second sleeve.

13. The battery box according to claim 11 or 12, **characterized in that**
a sealing ring and a structural adhesive are provided between the first sleeve and the bottom plate to form a sealing arrangement for the first through hole.

14. The battery box according to any one of claims 1 to 13, **characterized in that**
a side of the bottom plate facing away from the accommodation space is provided with a reinforcing rib, the reinforcing rib is provided with a mating hole, and the mating hole is aligned with and in communication with the first through hole.

15. The battery box according to any one of claims 1 to 13, **characterized in that**
the battery box comprises a plurality of mounting apparatuses uniformly distributed on the bottom plate.

16. The battery box according to any one of claims 1 to 15, **characterized in that**
the battery box comprises a lower box body and a box cover, wherein the lower box body and the box cover fit each other to form the accommodation space, a circumferential side of the lower box body is provided with a plurality of mounting portions, and the mounting portions are configured to be connected to the fixed installation body.

17. A battery, **characterized by** comprising:
the battery box according to any one of claims 1 to 16; and
a battery cell disposed in the accommodation space.

18. The battery according to claim 17, **characterized in that**
the mounting block abuts against side walls of battery cells surrounding the mounting block.

19. An electric device, **characterized by** comprising a fixed installation body and the battery according to any one of claims 17 and 18, wherein the battery is installed on the fixed installation body.
